# EUROPÄISCHE PATENTSCHRIFT

(11) **EP 1 792 097 B1**
(45) Veröffentlichungstag und Bekanntmachung des Hinweises auf die Patenterteilung: **05.08.2009**
(21) Anmeldenummer: 05791088.7
(22) Anmeldetag: 15.09.2005
(51) Int. Cl.: F16D 65/18

(54) **KLEMMEINRICHTUNG**
CLAMP DEVICE
DISPOSITIF DE SERRAGE

(30) Priorität: 17.09.2004 DE 102004045165; 24.02.2005 DE 102005008404
(43) Veröffentlichungstag der Anmeldung: 06.06.2007
(73) Patentinhaber: KNORR-BREMSE SYSTEME FÜR NUTZFAHRZEUGE GMBH, 80809 München (DE)
(72) Erfinder: CSÁK, Bence, H-1124 Budapest (HU); HERGES, Michael, D-80935 München (DE); GANZHORN, Dirk, D-84034 Landshut (DE)
(86) Internationale Anmeldenummer: PCT/EP2005/009918
(87) Internationale Veröffentlichungsnummer: WO 2006/029855

(56) Entgegenhaltungen:
- GB-A- 469 841
- US-A- 3 439 780
- US-A- 4 121 696
- US-A- 4 235 312

## Beschreibung

### Stand der Technik

Die Erfindung betriffteine Klemmeinrichtung zum Einsetzen zwischen zwei, eine Relativbewegung zueinander ausführbaren Teilen zur Verhinderung der Relativbewegung, insbesondere zur Verhinderung von Relativbewegung zwischen einer Bremsscheibe und einem Bremssattel einer Fahrzeugbremse, beinhaltend zwei Platten, welche durch wenigstens zwei gegeneinander geführte, zum Abrollen an Abrollflächen von einander zugewandten Innenseiten der Platten vorgesehene Rollen abstandsveränderlich sind, wobei, wenn sich die Rollen im Bereich eines ersten Abschnitts der Abrollflächen befinden, der Abstand der Platten zum Herbeiführen einer Klemmung gemäß eines ausgefahrenen Zustands größer ist als der Abstand, welchen die Platten zum Lösen der Klemmung gemäß eines eingefahrenen Zustands einnehmen, wenn sich die Rollen im Bereich eines zweiten Abschnitts der Abrollflächen befinden, und wobei die Lage der Rollen relativ zu den Abrollflächen mittels einer Betätigungseinrichtung veränderbar ist, gemäß dem Oberbegriff von Patentanspruch 1.

Eine solche Klemmeinrichtung ist aus der US 4 121 696 A bekannt. Nachteilig bei dieser Klemmeinrichtung ist jedoch, dass die zur Erzeugung der klemmenden Reibung erforderliche Normalkraft durch eine Verschiebung der Rollen entlang der Abrollflächen erzeugt wird, so dass zum Erzeugen von größeren Haltekräften, wie sie beispielsweise bei Fahrzeugparkbremsen notwendig sind, die Betätigungseinrichtung entsprechend hohe Betätigungskräfte aufbringen muss, was sie aber groß bauend und teuer macht. Außerdem ist dann ein relativ großer Energieeinsatz für die Betätigungseinrichtung notwendig. Nicht zuletzt neigen die Rollen aufgrund den unter hohen Kräften stattfindenden Bewegungen zu Verschleiß.

Der vorliegenden Erfindung liegt die Aufgabe zugrunde, eine Klemmeinrichtung zu schaffen, welche die genannten Nachteile weitgehend vermeidet.

Diese Aufgabe wird erfindungsgemäß durch die kennzeichnenden Merkmale von Patentanspruch 1 gelöst. Die Erfindung schlägt zusätzlich wenigstens zwei gegeneinander verkeilbare Keile vor, von welchen wenigstens einer durch eine weitere Betätigungseinrichtung in Richtung Klemmen oder Lösen der Klemmung betätigbar ist, wobei zum Herbeiführen einer Klemmung die Platten durch die eine Betätigungseinrichtung zunächst von ihrem eingefahrenen Zustand in den ausgefahrenen Zustand gebracht werden und anschließend wenigstens einer der Keile durch die weitere Betätigungseinrichtung in einer eine Relativbewegung zwischen den beiden Teilen verhindernden Richtung betätigt wird und zum Lösen der Klemmung die Platten durch die eine Betätigungseinrichtung von ihrem ausgefahrenen Zustand in den eingefahrenen Zustand gebracht werden und wenigstens einer der Keile durch die weitere Betätigungseinrichtung in einer eine Relativbewegung zwischen den beiden Teilen ermöglichenden Richtung betätigt wird.

Gegenüber dem Stand der Technik hat dies hat den Vorteil, dass die zur Erzeugung der klemmenden Reibung zwischen den beiden relativ zueinander bewegten Teilen erforderliche Normalkraft nicht durch eine Betätigung der Rollen erzeugt wird, sondern durch eine Betätigung wenigstens eines der Keile. Reibungsbedingt wird dann dieser Keil von dem sich noch bewegenden oder unter Drehmoment oder Kraft stehenden Teil, beispielsweise einer Bremsscheibe mitgenommen, wobei er sich mit dem anderen Keil weiter verkeilt, was eine Vergrößerung der Dicke des Keilpakets, somit eine Erhöhung der Normalkraft und schließlich auch eine Erhöhung der Reibkräfte mit sich bringt, wodurch das bewegte oder unter Drehmoment oder Kraft stehende Teil schließlich kraftschlüssig an dem anderen Teil festgelegt wird. Hingegen werden die Rollen während der Klemmung nicht betätigt. Sie befinden in einer Lage, in welcher die Platten ausgefahren sind.

Die Platten der Klemmeinrichtung können sich, bedingt durch die Bewegung der Rollen entlang der Abrollflächen, im wesentlichen linear und parallel voneinander entfernen und aneinander annähern. Alternativ kann die Klemmeinrichtung ähnlich einem Klappkeil wirken, indem sich die Platten gegeneinander winkelig ausklappen bzw. einklappen.

Besonders bevorzugt sind die Platten durch Drehbewegung um eine an ihren einen Enden angeordnete Gelenkverbindung gegeneinander winkelig auf- und einklappbar ausgebildet, wobei die anderen Enden mit den Abrollflächen versehen sind. Dadurch erhält die Klemmeinrichtung im ausgefahrenen oder ausgeklappten Zustand einen keilförmigen Querschnitt und kann sich zwischen den die Relativbewegung zueinander ausführenden Teilen verkeilen, vorzugsweise bis Selbsthemmung vorliegt.

Gemäß einer weiteren Maßnahme weist die Betätigungseinrichtung Federmittel auf, welche die Platten in den ausgefahrenen Zustand vorspannt. Zur Verwirklichung eines definierten Abrollverhaltens an den Abrollflächen können die Rollen in axialer Richtung gesehen wenigstens abschnittsweise je eine umlaufende Außenverzahnung aufweisen, welche mit Verzahnungen an den Abrollflächen kämmen. Eine vorteilhafte Doppelfunktion der Verzahnung, nämlich definierte Führung der Rollen an den Platten einerseits und Betätigungsantrieb andererseits wird erzielt, wenn die Betätigungseinrichtung eine den Rollen zwischengeordnete Zahnstange mit einer Doppelverzahnung an voneinander weg weisenden Längsseiten aufweist, welche mit den Außenverzahnungen der Rollen kämmt. Durch Linearbewegung der Zahnstange können dann die Rollen an den Abrollflächen entlang geführt werden, wozu ein einfacher Linearantrieb, beispielsweise auch von Hand ausreichend ist. Durch die Verzahnungen ist ein definiertes Rollverhalten der Rollen und damit auch ein definiertes Klemm- und Löseverhalten erzielbar.

Wenn die Zahnstange durch die Federmittel in eine Lage vorgespannt ist, in welcher sich die Rollen im Bereich des ersten Abschnitts der Abrollflächen befinden, wird die Klemmeinrichtung stets automatisch in ihren ausgeklappten Zustand vorgespannt, ohne dass hierzu weitere Maßnahmen oder Handhabungen notwendig wären. Das Auflösen der Klemmwirkung kann dann auf einfache Weise dadurch erfolgen, dass durch eine Linearbewegung der Zahnstange gegen die Wirkung der Federmittel die Rollen in den Bereich des zweiten Abschnitts der Abrollflächen gerollt werden, woraufhin die Klemmeinrichtung in den eingeklapptern Zustand gerät. Dadurch wird auch ein beliebig wiederholbares Klemmen und Lösen der Klemmeinrichtung möglich.

Gemäß einer Weiterbildung können auch mehrere, in Reihe angeordnete Abrollflächen und Rollen vorgesehen werden, was eine Erzeugung von sehr großen Klemmkräften ermöglicht.

Eine besonders zu bevorzugende Ausführungsform sieht eine Parallelschaltung der beiden durch die Rollen abstandsveränderlichen Platten vor.

Die Erfindung schlägt weiterhin eine Bremseinrichtung eines Fahrzeugs vor, insbesondere eines Nutzfahrzeugs, beinhaltend eine Scheibenbremse mit Bremsscheibe und Bremssattel, welche zum Einsetzen einer Klemmeinrichtung gemäß der Erfindung ausgebildet ist. Besonders bevorzugt kann hierbei eine Keilfläche des Bremssattels gegenüber der Ebene der Bremsscheibe derart keilwinkelig ausgebildet sein, dass bei sich gegenüber dem Bremssattel drehender Bremsscheibe und zwischen der Keilfläche des Bremssattels und der Bremsscheibe in ausgefahrenem oder ausgeklapptem Zustand eingesetzter Klemmeinrichtung sich diese immer stärker verkeilt, bis Selbsthemmung eintritt. Folglich sorgen die Federmittel hauptsächlich für die Vorspannung der Klemmeinrichtung in den ausgeklappten Zustand und weniger für die Erzeugung der Normalkräfte, aus denen die Reibkraft an der Bremsscheibe resultiert. Sie können daher klein und leicht dimensioniert werden, außerdem sind die Betätigungskräfte niedrig, so dass die Klemmeinrichtung leicht von Hand betätigt werden kann bzw. ein kleiner und leichter Antrieb für die Zahnstange ausreichend ist.

Besonders bevorzugt ist die Außenfläche der einen Platte zur Anlage an der Bremsscheibe der Fahrzeugbremse vorgesehen und weist einen höheren Reibwert auf als die Außenfläche der anderen Platte, welche zur Anlage an einer der Bremsscheibe gegenüberliegenden Keilfläche des Bremssattels der Fahrzeugbremse vorgesehen und deshalb ebenfalls keilförmig ausgebildet ist. Der höhere Reibwert an der einen Platte kann beispielsweise durch einen separaten Reibbelag realisiert sein, der das Zustandekommen von Haftreibung zwischen der Bremsscheibe und der Klemmeinrichtung garantiert. Die Außenfläche der anderen Platte braucht demgegenüber keinen hohen Reibwert aufweisen, da sie formschlüssig an der Keilfläche des Bremssattels gehalten wird und dadurch die für die Haftreibung notwendige Normalkraft erzeugt.

Der weitere Aufbau der erfindungsgemäßen Klemmeinrichtung wird durch die nachfolgende Beschreibung von Ausführungsbeispielen deutlich.

### Zeichnungen

Nachstehend sind Ausführungsbeispiele der Erfindung in der Zeichnung dargestellt und in der nachfolgenden Beschreibung näher erläutert. In der Zeichnung zeigt:
- Fig.1: eine stark schematisierte Querschnittsdarstellung einer Klemmeinrichtung gemäß einer bevorzugten Ausführungsform der Erfindung.;
- Fig.2: eine aufgeschnittene Draufsicht auf die Klemmeinrichtung von Fig.1;
- Fig.3: eine stark schematisierte Querschnittsdarstellung der Klemmeinrichtung von Fi.1 in eingeklappter Stellung;
- Fig.4: eine Draufsicht auf die zwischen einer Bremsscheibe und einen Bremssattel eines Fahrzeugs geklemmten Klemmeinrichtung von Fig.1;
- Fig.5: eine stark schematisierte Querschnittsdarstellung einer Klemmeinrichtung gemäß einer weiteren Ausführungsform der Erfindung;
- Fig.6: eine stark schematisierte Querschnittsdarstellung einer Klemmeinrichtung gemäß einer weiteren Ausführungsform der Erfindung;
- Fig.7: eine Draufsicht auf die zwischen einer Bremsscheibe und einen Bremssattel eines Fahrzeugs geklemmten Klemmeinrichtung von Fig.6.

### Beschreibung der Ausführungsbeispiele

Die in der Figur insgesamt mit 1 bezeichnete bevorzugte Ausführungsform einer Klemmeinrichtung dient beispielsweise zur Verhinderung von Relativbewegung zwischen einer Bremsscheibe 2 und einem Bremssattel 4 einer Fahrzeugbremse und soll im Einsatz wie eine Feststell- oder Parkbremse wirken.

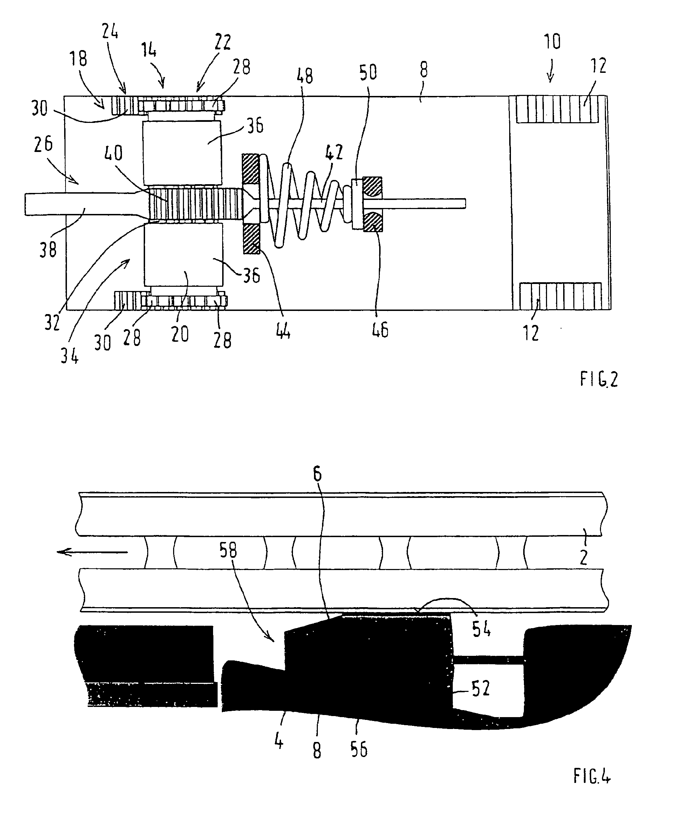

Die Klemmeinrichtung 1 beinhaltet zwei Platten 6, 8, welche an ihren einen Enden 10 aneinander gelenkig gelagert sind. Die gelenkige Lagerung kann beispielsweise durch miteinander kämmende, am Rand der Platten 6, 8 angeordnete Verzahnungsstreifen 12 in Bogenform verwirklicht sein, wie insbesondere aus Fig.2 hervorgeht.

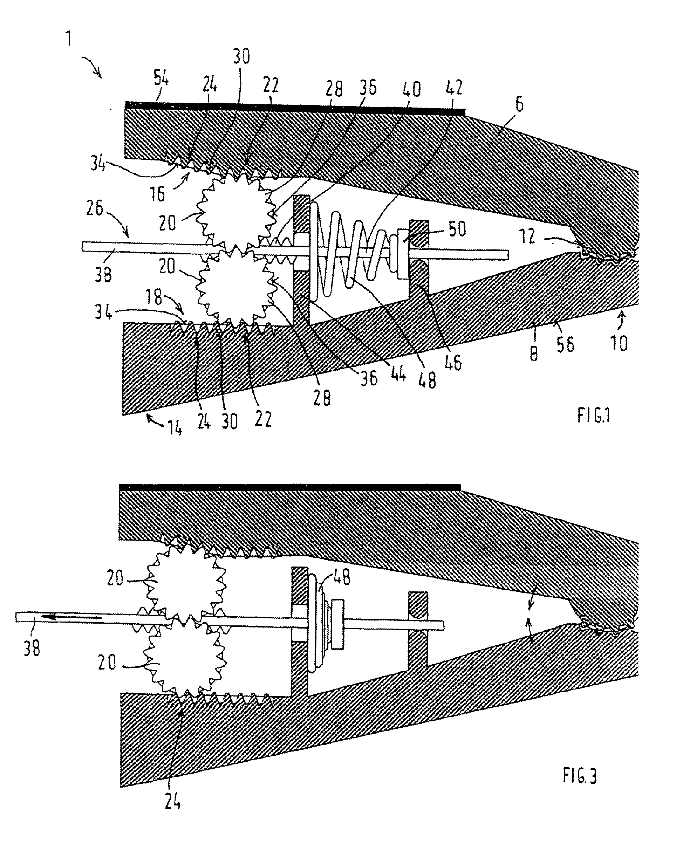

Die anderen Enden 14 der Platten sind durch vorzugsweise zwei gegeneinander geführte, zum Abrollen an Abrollflächen 16, 18 von einander zugewandten Innenseiten der Platten 6, 8 vorgesehene Rollen 20 abstandsveränderlich. Wie Fig.1 und Fig.3 veranschaulichen, ist, wenn sich die Rollen 20 im Bereich eines ersten Abschnitts 22 der Abrollflächen 16, 18 befinden (Fig.1), der Abstand der anderen Enden 14 der Platten 6, 8 zum Herbeiführen einer Klemmung gemäß eines ausgeklappten Zustands größer als der Abstand, welchen die anderen Enden 14 der Platten 6, 8 zum Lösen der Klemmung gemäß eines eingeklappten Zustands einnehmen, wenn sich die Rollen 20 im Bereich eines zweiten Abschnitts 24 der Abrollflächen 16, 18 befinden (Fig.3).

Vorzugsweise erweitert sich der zweite Abschnitt 24 der Abrollfläche 16 der einen Platte 6 im Querschnitt gesehen relativ zum ersten Abschnitt 22. Bei der anderen Platte 8 sind hingegen der erste Abschnitt 22 und der zweite Abschnitt 24 der Abrollfläche 18 eben. Die Lage der Rollen 22 relativ zu den Abrollflächen 16, 18 wird mittels einer Betätigungseinrichtung 26 verändert.

Die Rollen 20 weisen in axialer Richtung gesehen wenigstens abschnittsweise je eine umlaufende Außenverzahnung 28 auf, welche mit Verzahnungen 30 an den Abrollflächen 16, 18 kämmen. Wie aus Fig.2 hervorgeht, kann diese Kinematik beispielsweise dadurch realisiert sein, dass in axialer Richtung gesehen jeweils nur an den Enden der zylindrischen Rollen 20 Ringe mit umlaufender Außenverzahnung 28 angeordnet sind, welche mit Verzahnungsstreifen 30 am Rand der Platten 6, 8 kämmen. Weiterhin weisen die Rollen 20 in ihrem Mittelabschnitt je eine umlaufende, in ihrer axialen Erstreckung begrenzte Außenverzahnung 32 auf. Die Verzahnungen 28, 32 sollen lediglich für eine definierte Führung der Rollen 20 relativ zu den Abrollflächen 16, 18 sorgen, aber keine Keilkräfte übertragen. Hingegen sind glatte und verzahnungslose, den Verzahnungen 28, 32 axial zwischengeordnete Abschnitte 34, 36 der Abrollflächen 16, 18 und der Rollen 20 lastübertragend und kontaktieren einander unter Flächenpressung, wenn Keilkräfte wirken.

Gemäß der bevorzugten Ausführungsform weist die Betätigungseinrichtung 26 eine den Rollen 20 radial zwischengeordnete Zahnstange 38 mit einer in Längsrichtung gesehen etwa im Mittelbereich ausgebildeten Doppelverzahnung 40 an den voneinander weg weisenden Längsseiten auf, welche mit den umlaufenden, zentralen Außenverzahnungen 32 der Rollen 20 kämmen. Die Zahnstange 38 ist mit einem ihrer zahnlosen Endabschnitte 42 an beispielsweise zwei von einer Platte 8 getragen Lagerböcken 44, 46 bezüglich der Rollen 20 tangential geführt. Hierdurch sind die Rollen 20 nicht nur gegenüber den Abrollflächen 16, 18 der Platten 6, 8 , sondern auch gegeneinander bzw. relativ zur Zahnstange 38 geführt.

Die Betätigungseinrichtung 26 weist außerdem Federmittel 48 auf, welche die Klemmeinrichtung 1 bzw. die Platten 6, 8 in den ausgeklappten Zustand vorspannt, wie er in Fig.1 gezeigt ist. Im einzelnen wird die Zahnstange 38 durch eine Druckfeder 48, welche sich einerseits an dem dem anderen Ende 14 der Platten 6, 8 zugewandten Lagerbock 44 und andererseits an einem mit dem zahnlosen Endabschnitt 42 der Zahnstange 38 axialfesten Ring 50 abstützt, in eine Lage vorgespannt, in welcher sie die Rollen 20 in den Bereich des ersten Abschnitts 22 der Abrollflächen 16, 18 transportiert. In dieser Lage befindet sich die Klemmeinrichtung 1 in ausgeklapptem Zustand. Damit die Windungen der Druckfeder 48 beim Zusammendrücken ineinander eintauchen können, ist sie kegelförmig ausgestaltet. Die Zahnstange 38 kann manuell oder auch durch jegliche Art von Antrieb zum Ein- und Ausrücken betätigt sein.

Besonders bevorzugt ist die ebene Außenfläche der einen Platte 6 zur Anlage an der Bremsscheibe 2 der Fahrzeugbremse vorgesehen und weist einen höheren Reibwert auf als die Außenfläche 56 der anderen Platte 8, welche zur Anlage an einer der Bremsscheibe 2 gegenüberliegenden Keilfläche 52 des Bremssattels 4 vorgesehen und deshalb ebenfalls keilförmig ausgebildet ist, wie insbesondere aus Fig.4 hervorgeht. Der höhere Reibwert an der einen Platte 6 kann beispielsweise durch einen separaten, auf die Außenfläche aufgebrachten Reibbelag 54 realisiert sein, der das Zustandekommen von Haftreibung zwischen der Bremsscheibe 2 und der Klemmeinrichtung 1 garantiert (Fig.1 und Fig.3). Die Außenfläche 56 der anderen Platte 8 braucht demgegenüber keinen hohen Reibwert aufweisen, da sie formschlüssig an der Keilfläche 52 des Bremssattels 4 gehalten wird und dadurch die für die Haftreibung notwendige Normalkraft erzeugt.

Wird nun die Zahnstange 38 ausgehend von ihrer in Fig.1 gezeigten Lage, in welcher sich die Rollen 20 im Bereich des ersten Abschnitts 22 der Abrollflächen 16, 18 befinden, von den einen Enden 10 der Platten 6, 8 weg, gemäß dem Pfeil in Fig.2 also nach links beispielsweise manuell gezogen, so rollen die Rollen 20 an den Abrollflächen 16, 18 entlang ebenfalls nach links und gelangen in den Bereich des zweiten Abschnitts 24, wodurch zum einen die beiden Platten 6, 8 zueinander um die Gelenkverbindung 12 verschwenkt werden und zum andern sich der Abstand der sich einander gegenüberliegenden anderen 14 Enden der Platten 6, 8 verkleinert. In diesem eingeklappten Zustand kann die erfindungsgemäße Klemmeinrichtung 1 beispielsweise in einen Zwischenraum 58 zwischen die Bremsscheibe 2 und den Bremssattel 4 eingesetzt werden, indem zunächst die andere Platte 8 an der zugeordneten Keilfläche 52 des Bremssattels 4 ausgerichtet wird. Danach wird die Zahnstange 38 kraftfrei gesetzt, beispielsweise durch Loslassen, wodurch die Rollen 20 durch die sich entspannende Druckfeder 48 in ihre in Fig.1 gezeigte Ausgangslage zurückkehren, in welcher die Platten 6, 8 ausgeklappt sind und infolgedessen der Reibbelag 54 der einen Platte 6 an der Bremsscheibe 2 zur Anlage kommt.

Die Keilfläche 52 des Bremssattels 4 ist vorzugsweise gegenüber der Ebene der Bremsscheibe 2 derart keilwinkelig ausgebildet, dass sich bei Relativbewegung zwischen Bremsscheibe 2 und Bremssattel 4 die ausgeklappte Klemmeinrichtung 1 immer stärker verkeilt, bis schließlich Selbsthemmung eintritt. Folglich sorgt die Druckfeder 48 hauptsächlich für die Rückstellung und weniger für die Erzeugung der Normalkräfte, aus denen die Reibkraft an der Bremsscheibe 2 resultiert.

Zum Lösen der Klemmeinrichtung 1 wird die Zahnstange 38 gegen die Wirkung der Druckfeder 48 gemäß Fig.3 wiederum nach links bewegt, beispielsweise von Hand, wobei die Rollen 20 in den Bereich des zweiten Abschnitts 24 der Abrollflächen 16, 18 gelangen und den Abstand der anderen Enden 14 der Platten 6, 8 voneinander verkleinern, wodurch die Klemmeinrichtung 1 leicht wieder aus dem Zwischenraum 58 zwischen der Bremsscheibe 2 und dem Bremssattel 4 entnommen werden kann.

Die Erfindung ist nicht auf das beschriebene Ausführungsbeispiel beschränkt, bei welchem die beiden Platten 6, 8 relativ zueinander aus- bzw. einklappbar ausgebildet sind.

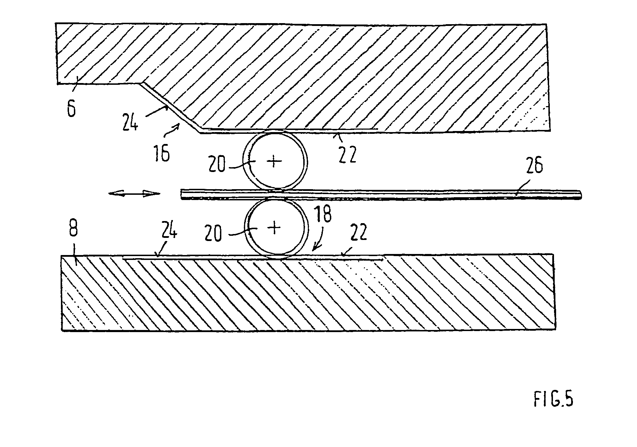

Alternativ können sich die Platten der Klemmeinrichtung bedingt durch die Bewegung der Rollen 20 entlang der Abrollflächen 16, 18 auch linear und parallel voneinander entfernen und entsprechend aneinander annähern, wie es bei dem Ausführungsbeispiel gemäß Fig.5 verwirklicht ist.

Vorzugsweise erweitert sich der zweite Abschnitt 24 der Abrollfläche 16 der einen Platte 6 im Querschnitt gesehen relativ zum ersten Abschnitt 22. Bei der anderen Platte 8 sind hingegen der erste Abschnitt 22 und der zweite Abschnitt 24 der Abrollfläche 18 beispielsweise eben und koplaner zueinander. Die Lage der Rollen 22 relativ zu den Abrollflächen 16, 18 wird wiederum mittels einer Betätigungseinrichtung 26 verändert, die beispielsweise wiederum als Zahnstange ausgeführt ist. Durch Linearbetätigung der Zahnstange 26 in Richtung der zweiten Abschnitte 24 gelangen die beiden Rollen 20 von einer Lage im Bereich der parallel zueinander verlaufenden ersten Abschnitte 22, in welcher die beiden Platten 6, 8 maximal voneinander entfernt sind und sich die Klemmeinrichtung 1 daher in einem ausgefahrenen Zustand (Klemmstellung) befindet, in eine Lage im Bereich der zweiten Abschnitte 24, in welcher eine der Rollen 20 auf dem sich keilförmig erweiternden zweiten Abschnitt 24 der Platte 6 abrollt und sich die Platten 6, 8 daher in einem eingefahrenen Zustand mit geringerem Abstand (Lösen der Klemmung) zueinander befinden. Bei Betätigung der Zahnstange 26 in Gegenrichtung, d.h. in Richtung auf die ersten Abschnitte 22 zu, wird die Klemmung wieder herbeigeführt.

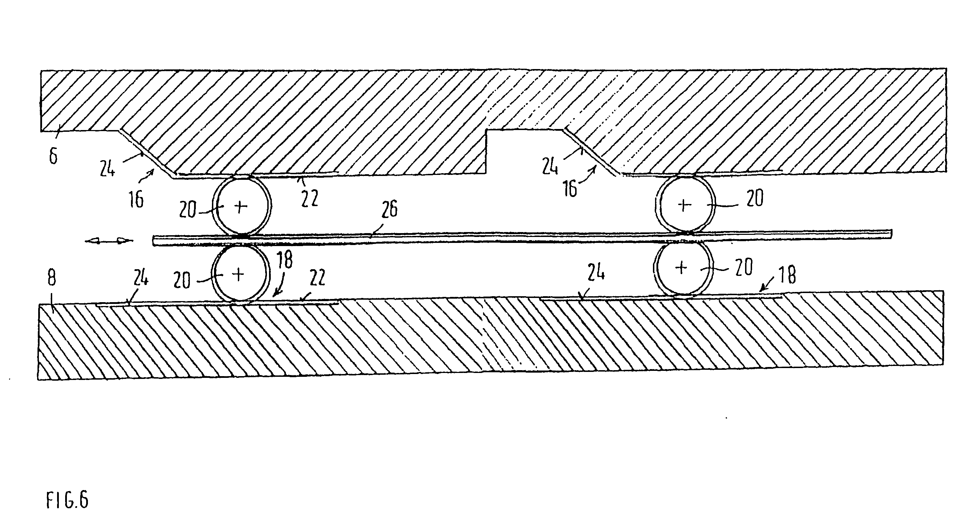

Anstatt nur an einer der Platten 6 einen keilförmigen Abschnitt 24 der Abrollfläche 16 vorzusehen, kann eine solche auch an der anderen Platte 8 verwirklicht sein. Nicht zuletzt ist auch eine Hintereinanderschaltung von mehreren Abrollflächen 16, 18 mit zugeordneten Rollen 20 möglich, wie die Ausführungsform von Fig.6 zeigt, wobei gleichartige Abrollflächen 16, 18, d.h. solche, welche flach sind wie die Flächen 18 und solche, welche keilförmig sind wie die Abrollflächen 16 jeweils an einer der Platten 6, 8 ausgebildet sind.

Fig. zeigt eine Brenseinrichtung mit einer Klemmeinrichtung gemäß der Erfindung und ein bevorzugtes Anwendungsbeispiel der Ausführungsform von Fig.6, wobei zwischen der Platte 6 und der Bremsscheibe 2 ein sich in Drehrichtung der Bremsscheibe 2 verjüngender Keil 60 vorgesehen ist, welcher mit einer komplementären, sich gegen die Drehrichtung der Bremsscheibe 2 verjüngenden Keilfläche 62 eines weiteren Keils 64 zusammenwirkt. Damit kann die Klemmeinrichtung 1 eine Betriebs- und/oder Parkbremse bilden. Wie durch den Pfeil angedeutet, ist der Keil 60 mittels einer weiteren Betätigungseinrichtung 59 linear betätigbar, derart, dass er entlang der Keilfläche 62 rutschen kann und somit die Entfernung des Reibbelags 54 von der Bremsscheibe 2 bzw. den Anlegedruck an die Bremsscheibe 2 variieren kann. Weiterhin kontaktiert eine flache Seite des weiteren Keils 64 die äußere Fläche der Platte 6, welche zusammen mit der Platte 8 und den Rollen 20 dem Ausführungsbeispiel einer Keilbremse 1 von Fig. 6 entspricht und mittels Linearbewegung der Betätigungseinrichtung 26 betätigt wird.

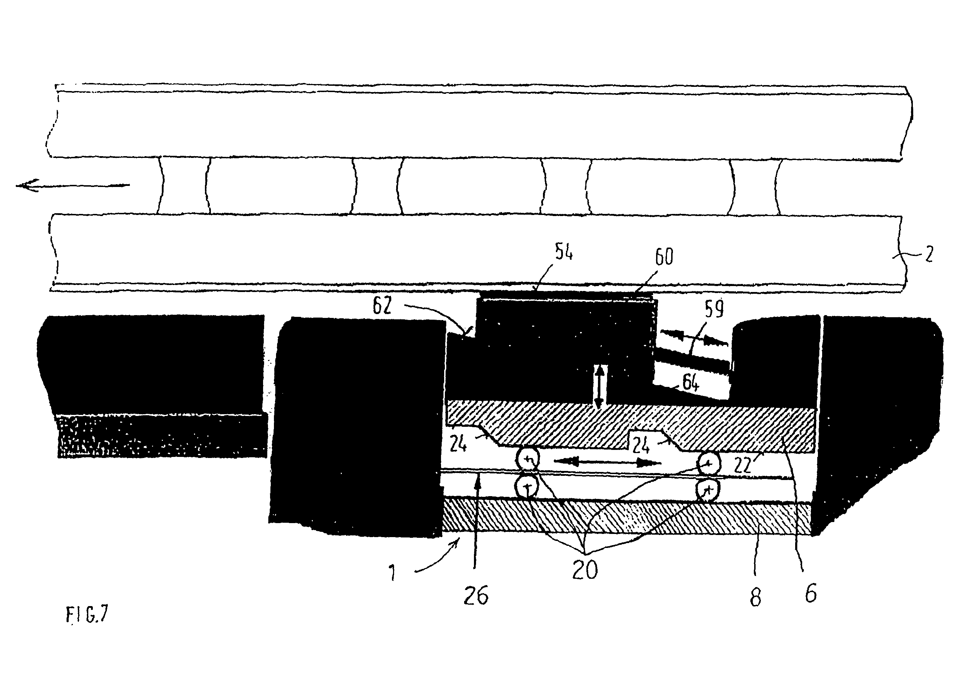

Eine Klemmung wird dadurch erreicht, dass der Keil 60 auf der Keilfläche 62 in Fig.4 und 7 nach links verschoben wird, Kontakt zur Bremsscheibe 2 erhält und von dieser bis zur vollständigen Klemmung weiter mitgenommen wird. Während dieses Vorganges müssen sich die Platten 6, 8 bereits im ausgeklappten bzw. ausgefahrenen Zustand befinden. In diesem Fall dienen die Platten 6, 8 zusammen mit den Rollen 20 dazu, die Klemmeinrichtung 1 mit wenig Kraft wieder lösen zu können. Wenn die Platten 6, 8 sich aufgrund einer Betätigung der Betätigungseinrichtung 26 in eingeklappter oder eingefahrener Stellung befinden, dann muss zunächst der Keil 60 wieder vollständig nach rechts zurückgezogen worden sein, bevor die Platten 6, 8 wieder ausgeklappt bzw. ausgefahren werden können. Die zur Erzeugung der klemmenden Reibung erforderliche Normalkraft wird also nicht durch eine Betätigung der Rollen 20 erzeugt, sondern sie wird nur über die im ausgeklappten Zustand befindlichen Platten 6, 8 gegen den Bremssattel 4 abgestützt. Weil die Normalkraft im ausgeklappten Zustand der Platten 6, 8 keinen Einfluss auf die Bewegung der Rollen 20 haben darf, sind die Abrollflächen 16 und 18 im ersten Abschnitt 22 parallel zueinander. Der Abschnitt 24 trägt hier nicht zur Keilwirkung bei, sondern dient nur zur Verkürzung des Abstandes der Platten 6 und 8, was zum Abbau der Normalkraft führt und in einer Freigabe des Keils 60 resultiert, der dann annähernd kraftfrei zurückgezogen werden kann. Da die Rollen 20 auf dem ersten Abschnitt 22 in einem Winkel von 90° zur Normalkraft abrollen, und die Normalkraft somit keine Komponente in eine der Bewegungsrichtungen der Rollen 20 hat, ist auch diese Bewegung bis auf eine geringe Rollreibung kraftfrei. Erreichen die Rollen 20 den zweiten Abschnitt 24, so ist die Bewegungsrichtung nicht mehr 90° zur Normalkraft und die Komponente der Normalkraft in Bewegungsrichtung der Rollen 20 hilft beim weiteren Öffnen. Die Rollen 20 rutschen sozusagen in die eingeklappte Position. Zurückbewegt werden können sie aber nur, wenn der Keil 60 zunächst in die rechte Position gefahren worden ist, so dass er auch im ausgeklappten oder ausgefahrenen Zustand der Platten 6, 8 nicht an der Bremsscheibe 2 anliegt und somit keine Normalkraft erzeugt wird. In dieser Position des Keils 60 können die Rollen 20 auch in den ausgeklappten oder ausgefahrenen Zustand annähernd kräftefrei gefahren werden.

Im einzelnen ergibt sich daher folgende Funktionsweise der Klemmeinrichtung 1 gemäß Fig.7: Beim fahrenden Fahrzeug befinden sich die Platten 6, 8 durch Verfahren der Rollen 20 mittels der Betätigungseinrichtung 26 in den ersten Abschnitt 22 in der ausgeklappten oder ausgefahrenen Grundstellung. Der Keil 60 befindet sich dabei in rechter Position, d.h. er liegt nicht an der Bremsscheibe 2 an. Soll nun nach einem Halt des Fahrzeugs die Parkbremse eingelegt werden, so befinden sich die Platten 6, 8 immer noch in ausgeklappter oder ausgefahrener Stellung. Jedoch wird durch die Betätigungsmittel 59 der Keil 60 in Fig.7 entlang der Keilfläche 62 nach links bewegt, bis er an der Bremsscheibe 2 anliegt und von den Betätigungsmitteln 59 mit geringer Druckkraft gegen sie gedrückt wird. Wenn das Fahrzeug auf abschüssiger Strecke parkt, dann wird der Keil 60 von der Bremsscheibe 2 weiter, in Fig.7 nach links mitgezogen und fest verklemmt.

Zum Lösen der Parkbremse wird bei stehendem Fahrzeug durch die Betätigungsmittel 59 eine geringe Zugkraft auf den Keil 60 in Löserichtung, d.h. in Fig.7 nach rechts ausgeübt, jedoch bleibt der Keil 60 zunächst aber noch fest verklemmt. Hierauf werden die sich im ersten Abschnitt 22 befindlichen Rollen 20 durch die Betätigungseinrichtung 26 so verfahren, dass die Rollen 20 den zweiten Abschnitt 24 erreichen und die Platten 6, 8 hierdurch in die einklappte bzw. eingefahrene Stellung gelangen. Der Keil 60 ist nun frei und wird von den Betätigungsmitteln 59 in die rechte Position gefahren, in der er keinen Kontakt mehr zur Bremsscheibe 2 hat. Um zur Grundstellung im Fahrbetrieb zurückzugelangen, werden die Platten 6, 8 wiederum in die ausgeklappte oder ausgefahrene Stellung gebracht.

### Bezugszeichenliste

- 1: Klemmeinrichtung
- 2: Bremsscheibe
- 4: Bremssattel
- 6: Platte
- 8: Platte
- 10: Ende
- 12: Verzahnung
- 14: Ende
- 16: Abrollfläche
- 18: Abrollfläche
- 20: Rollen
- 22: erster Abschnitt
- 24: zweiter Abschnitt
- 26: Betätigungseinrichtung
- 28: Außenverzahnung
- 30: Verzahnungsstreifen
- 32: Außenverzahnung
- 34: verzahnungslose Abschnitte
- 36: verzahnungslose Abschnitte
- 38: Zahnstange
- 40: Doppelverzahnung
- 42: Endabschnitt
- 44: Lagerbock
- 46: Lagerbock
- 48: Druckfeder
- 50: Ring
- 52: Keilfläche
- 54: Reibbelag
- 56: Außenfläche
- 58: Zwischenraum
- 59: weitere Betätigungseinrichtung
- 60: Keil
- 62: Keilfläche
- 64: Keil

## Patentansprüche

1. Klemmeinrichtung (1) zum Einsetzen zwischen zwei, eine Relativbewegung zueinander ausführbaren Teilen (2, 4) zur Verhinderung der Relativbewegung, insbesondere zur Verhinderung von Relativbewegung zwischen einer Bremsscheibe (2) und einem Bremssattel (4) einer Fahrzeugbremse, beinhaltend zwei Platten (6, 8), welche durch wenigstens zwei gegeneinander geführte, zum Abrollen an Abrollflächen (16, 18) von einander zugewandten Innenseiten der Platten (6, 8) vorgesehene Rollen (20) abstandsveränderlich sind, wobei, wenn sich die Rollen (20) im Bereich eines ersten Abschnitts (22) der Abrollflächen (16, 18) befinden, der Abstand der Platten (6, 8) zum Herbeiführen einer Klemmung gemäß eines ausgefahrenen Zustands größer ist als der Abstand, welchen die Platten (6, 8) zum Lösen der Klemmung gemäß eines eingefahrenen Zustands einnehmen, wenn sich die Rollen (20) im Bereich eines zweiten Abschnitts (24) der Abrollflächen (16, 18) befinden, und wobei die Lage der Rollen (20) relativ zu den Abrollflächen (16, 18) mittels einer Betätigungseinrichtung (26) veränderbar ist, **gekennzeichnet durch** wenigstens zwei gegeneinander verkeilbare Keile (60, 64), von welchen wenigstens einer **durch** eine weitere Betätigungseinrichtung (59) in Richtung Klemmen oder Lösen der Klemmung betätigbar ist, wobei zum Herbeiführen einer Klemmung die Platten (6, 8) durch die eine Betätigungseinrichtung (26) zunächst von ihrem eingefahrenen Zustand in den ausgefahrenen Zustand gebracht werden und anschließend wenigstens einer der Keile (60, 64) **durch** die weitere Betätigungseinrichtung (59) in einer eine Relativbewegung zwischen den beiden Teilen (2, 4) verhindernden Richtung betätigt wird und zum Lösen der Klemmung die Platten (6, 8) **durch** die eine Betätigungseinrichtung (26) von ihrem ausgefahrenen Zustand in den eingefahrenen Zustand gebracht werden und wenigstens einer der Keile (60, 64) **durch** die weitere Betätigungseinrichtung (59) in einer eine Relativbewegung zwischen den beiden Teilen (2, 4) ermöglichenden Richtung betätigt wird.

2. Klemmeinrichtung nach Anspruch 1, **dadurch gekennzeichnet, dass** die Platten (6, 8) durch Drehbewegung um eine an ihren einen Enden (10) angeordnete Gelenkverbindung gegeneinander winkelig auf- und einklappbar ausgebildet sind, wobei die anderen Enden (14) mit den Abrollflächen versehen sind.

3. Klemmeinrichtung nach Anspruch 1 oder 2, **dadurch gekennzeichnet, dass** die Betätigungseinrichtung (26) Federmittel (48) aufweisen, welche die Platten (6, 8) in den ausgeklappten Zustand vorspannt.

4. Klemmeinrichtung nach Anspruch 3, **dadurch gekennzeichnet, dass** die Rollen (20) in axialer Richtung gesehen wenigstens abschnittsweise je eine umlaufende Außenverzahnung (28) aufweisen, welche mit Verzahnungen (30) an den Abrollflächen (16, 18) kämmen.

5. Klemmeinrichtung nach Anspruch 4, **dadurch gekennzeichnet, dass** die Betätigungseinrichtung (26) eine den Rollen (20) zwischengeordnete Zahnstange (38) mit einer Doppelverzahnung (40) an voneinander weg weisenden Längsseiten aufweist, welche mit zugeordneten Außenverzahnungen (32) der Rollen (20) kämmt.

6. Klemmeinrichtung nach Anspruch 5, **dadurch gekennzeichnet, dass** die Zahnstange (38) durch die Federmittel (48) in eine Lage vorgespannt ist, in welcher sich die Rollen (20) im Bereich des ersten Abschnitts (22) der Abrollflächen (16, 18) befinden.

7. Klemmeinrichtung nach Anspruch 6, **dadurch gekennzeichnet, dass** durch eine Linearbewegung der Zahnstange (38) gegen die Wirkung der Federmittel (48) die Rollen (20) in den Bereich des zweiten Abschnitts (24) der Abrollflächen (16, 18) rollbar sind.

8. Klemmeinrichtung nach wenigstens einem der vorhergehenden Ansprüche, **dadurch gekennzeichnet, dass** der erste Abschnitt (22) und der zweite Abschnitt (24) der Abrollfläche (16) der einen Platte (6) koplanar eben und der zweite Abschnitt (24) der Abrollfläche (18) der anderen Platte (8) im Querschnitt gesehen sich relativ zum ersten Abschnitt (22) keilförmig erweitert oder verengt.

9. Klemmeinrichtung nach wenigstens einem der vorhergehenden Ansprüche, **dadurch gekennzeichnet, dass** die Außenfläche der einen Platte zur Anlage an einer Bremsscheibe (2) vorgesehen ist und einen höheren Reibwert aufweist als die Außenfläche (56) der anderen Platte, welche zur Anlage an einer der Bremsscheibe (2) gegenüberliegenden Keilfläche (52) des Bremssattels (4) vorgesehen ist.

10. Klemmeinrichtung nach wenigstens einem der vorhergehenden Ansprüche, **dadurch gekennzeichnet, dass** mehrere, in Reihe angeordnete Abrollflächen (16, 18) und Rollen (20) vorgesehen sind.

11. Klemmeinrichtung nach wenigstens einem der vorhergehenden Ansprüche, **gekennzeichnet durch** eine Parallelschaltung der beiden **durch** die Rollen (20) abstandsveränderlichen Platten (6, 8).

12. Klemmeinrichtung nach wenigstens einen der vorhergehenden Ansprüche **dadurch gekennzeichnet, dass** die Betätigungseinrichtungen (26, 59) miteinander gekoppelt sind.

13. Bremseinrichtung eines Fahrzeugs, insbesondere eines Nutzfahrzeugs, beinhaltend eine Scheibenbremse mit Bremsscheibe (2) und Bremssattel (4), und welche eine Klemmeinrichtung (1) nach wenigstens einem der vorhergehenden Ansprüche in einen Zwischenraum (58) zwischen der Bremsscheibe (2) und dem Bremssattel (4) enthält,

14. Bremseinrichtung nach Anspruch 13, **dadurch gekennzeichnet, dass** eine Keilfläche (52) des Bremssattels (4) gegenüber der Ebene der Bremsscheibe (2) derart keilwinkelig ausgebildet ist, dass bei sich gegenüber dem Bremssattel (4) drehender Bremsscheibe (2) und in ausgefahrenem Zustand in den Zwischenraum (58) eingesetzter Klemmeinrichtung (1) sich diese immer stärker verkeilt, bis Selbsthemmung eintritt.

## Claims

1. A wedging clamp device (1) for insertion between two parts (2, 4), capable of performing a relative movement in relation to one another, in order to prevent their relative movement, particularly in order to prevent relative movement between a brake disk (2) and a brake caliper (4) of a vehicle brake, comprising two plates (6, 8), the separation between which is adjustable by means of at least two opposed rollers (20) rolling on rolling surfaces (16, 18) on opposing inner sides of the plates (6, 8), wherein the separation of the plates (6, 8), for bringing about a wedging in an extended state, is greater when the rollers (20) are situated in the area of a first section (22) of the rolling surfaces (16, 18), than the separation, assumed by the plates (6, 8) for release of the wedging in a retracted state, when the rollers (20) are situated in the area of a second section (24) of the rolling surfaces (16, 18), and wherein the position of the rollers (20) relative to the rolling surfaces (16, 18) is adjustable by means of an actuating device (26), **characterized by** at least two wedges (60, 64) that can be wedged against one another, at least one of which can be actuated by a further actuating device (59) in the wedging or release direction, one actuating device (26) first bringing the plates (6, 8) from their retracted position into the extended position, and the further actuating device (59) then actuating at least one of the wedges (60, 64) in a direction preventing a relative movement between the two parts (2, 4), in order to bring about wedging, and the one actuating device (26) bringing the plates (6, 8) from their extended position into the retracted position, and the further actuating device (59) actuating at least one of the wedges (60, 64) in a direction allowing a relative movement between the two parts (2, 4), in order to release the wedging.

2. The wedging clamp device as claimed in claim 1, **characterized in that** the plates (6, 8) can be folded out and in at an angle to one another under a rotational movement about an articulated connection arranged at their ends (10), the other ends (14) being provided with the rolling surfaces.

3. The wedging clamp device as claimed in claim 1 or 2, **characterized in that** the actuating device (26) has a spring means (48), which preloads the plates (6, 8) into the deployed position.

4. The wedging clamp device as claimed in claim 3, **characterized in that** the rollers (20), viewed in an axial direction, each have, at least in sections, a circumferential external toothing (28), which meshes with toothing systems (30) on the rolling surfaces (16, 18).

5. The wedging clamp device as claimed in claim 4, **characterized in that** the actuating device (26) comprises a rack (38) arranged between the rollers (20), which rack has a double toothing (40) on the longitudinal sides remote from one another and which meshes with the associated external toothing systems (32) of the rollers (20).

6. The wedging clamp device as claimed in claim 5, **characterized in that** the spring means (48) preloads the rack (38) into a position in which the rollers (20) are situated in the area of the first section (22) of the rolling surfaces (16, 18).

7. The wedging clamp device as claimed in claim 6, **characterized in that** a linear movement of the rack (38) against the action of the spring means (48) causes the rollers (20) to roll into the area of the second section (24) of the rolling surfaces (16, 18).

8. The wedging clamp device as claimed in at least one of the preceding claims, **characterized in that** the first section (22) and the second section (24) of the rolling surface (16) of the one plate (6) are even and coplanar and that, viewed in cross section, the second section (24) of the rolling surface (18) of the other plate (8) widens or narrows in a wedge shape relative to the first section (22).

9. The wedging clamp device as claimed in at least one of the preceding claims, **characterized in that** the outer face of the one plate is intended to bear against a brake disk (2) and has a higher coefficient of friction than the outer face (56) of the other plate, which is intended to bear against a wedge face (52) of the brake caliper (4) opposite the brake disk (2).

10. The wedging clamp device as claimed in at least one of the preceding claims, **characterized in that** multiple rolling surfaces (16, 18) and rollers (20) arranged in series are provided.

11. The wedging clamp device as claimed in at least one of the preceding claims, **characterized by** a parallel connection of the two plates (6, 8), adjustably separated by the rollers (20).

12. The wedging clamp device as claimed in at least one of the preceding claims, **characterized in that** the actuating devices (26, 59) are coupled to one another.

13. A vehicle brake device, particularly for a commercial vehicle, comprising a disk brake with brake disk (2) and brake caliper (4) and which contains a wedging clamp device (1) as claimed in at least one of the preceding claims into a gap (58) between the brake disk (2) and the brake caliper (4).

14. The brake device as claimed in claim 13, **characterized in that** a wedge face (52) of the brake caliper (4) is formed with a wedge angle in relation to the plane of the brake disk (2), in such a way that with the brake disk (2) rotating in relation to the brake caliper (4), and the wedging clamp device (1) inserted in an extended state into the gap (58), the wedging clamp device wedges ever more tightly until self-locking occurs.

## Revendications

1. Dispositif de serrage (1) à insérer entre deux parties (2, 4) aptes à réaliser un mouvement relatif l'une à l'autre afin d'empêcher ledit mouvement relatif, en particulier à empêcher un mouvement relatif entre un disque de frein (2) et un étrier de frein (4) d'un frein de véhicule, comprenant deux plaques (6, 8), dont l'écart est variable moyennant au moins deux rouleaux (20) guidés l'un à l'encontre de l'autre et disposés de façon à rouler aux aires de roulement (16, 18) de deux côtés intérieurs l'un en face de l'autre, dans lequel, quand lesdits rouleaux (20) se trouvent dans la zone d'un premier segment (22) desdites aires de roulement (16, 18), ledit écart entre lesdites plaques (6, 8) à induire une action de serrage correspondant à un état avancé est plus grand que l'écart auquel lesdites plaques (6, 8) sont positionnés à desserrer l'action de serrage correspondant à un état rentré, quand lesdits rouleaux (20) se trouvent dans la zone d'un deuxième segment (24) desdites aires de roulement (16, 18), et dans lequel la position desdits rouleaux (20) est variable relativement auxdites aires de roulement (16, 18), moyennant un système de commande (26), **caractérisé par** au moins deux clavettes (60, 64) aptes à être calé l'un relativement à l'autre, dont au moins une et actionnable en sens de serrage ou en sens de desserrage de l'action de serrage moyennant un autre système de commande (59), dans lequel lesdites plaques (6, 8) sont porté d'abord de leur état rentré dans leur état avancé, moyennant un système de commande (26), afin d'induire une action de serrage et dans lequel au moins une desdites clavettes (60, 64) est commandé ensuite, moyennant ledit autre système de commande (50), en un sens empêchant un mouvement relatif entre lesdites deux parties (2, 4) et dans lequel lesdites plaques (6, 8) sont porté, par ledit un système de commande (26), de leur état avancé en l'état rentré afin de desserrer ladite action de serrage, à au moins une desdites clavettes (60, 64) étant commandé par ledit autre système de commande (59) en un sens permettant un mouvement relatif entre lesdites deux parties (2, 4).

2. Dispositif de serrage selon la revendication 1, **caractérisé en ce que** lesdites plaques (6, 8) sont configurées d'une façon qu'elles soient relevables et repliables, en formant un angle l'une relativement à l'autre, autour d'un assemblage articulé disposé à leurs premières extrémités (10), à leurs autres extrémités (14) étant pourvues desdites aires de roulement.

3. Dispositif de serrage la revendication 1 ou 2, **caractérisé en ce que** ledit système de commande (26) comprend des moyens à ressort (48) mettant lesdites disques (6, 8) en l'état relevé.

4. Dispositif de serrage selon la revendication 3, **caractérisé en ce que**, vu en sens axial, lesdits rouleaux (20) comprennent une denture extérieure périphérique respective (28), au moins en segments, lesdites dentures s'engrenant dans des dentures (30) auxdites aires de roulement (16, 18).

5. Dispositif de serrage selon la revendication 4, **caractérisé en ce que** ledit système de commande (26) comprend une crémaillère (38) à denture double (40) aux côtés tournés l'un à part de l'autre, qui s'engrène dans des dentures extérieures y affectées (32) auxdits rouleaux (20).

6. Dispositif de serrage selon la revendication 5, **caractérisé en ce que** ladite crémaillère est mise en précontrainte, moyennant lesdits moyens à ressort (48), en une position dans laquelle lesdits rouleaux (20) se trouvent dans la zone dudit premier segment (22) desdites aires de roulement (16, 18).

7. Dispositif de serrage selon la revendication 6, **caractérisé en ce qu'**en vertu d'un mouvement linéaire de ladite crémaillère (38) à l'encontre de l'effet desdits moyens à ressort (48), lesdits rouleaux (20) se peuvent rouler dans la zone dudit deuxième segment (24) desdites aires de roulement (16, 18).

8. Dispositif de serrage selon au moins une quelconque des revendications précédentes, **caractérisé en ce que** ledit premier segment (22) et ledit deuxième segment (24) de ladite aire de roulement (16) de la première plaque (6) est coplanaire et plan, pendant que, vu en section transversale, ledit deuxième segment (24) de ladite aire de roulement (18) de l'autre plaque (8) s'élargit ou se rétrécisse en forme de clavette, relativement audit premier segment (22).

9. Dispositif de serrage selon au moins une quelconque des revendications précédentes, **caractérisé en ce que** la surface extérieure de ladite première plaque est prévue à prendre appui contre un disque de frein (2), en présentant un coefficient de frottement plus haut que le coefficient de la surface extérieure (56) de l'autre plaque, qui est prévue à prendre appui contre une aire de clavette (52) dudit étrier de frein (4), qui est opposée audit disque de frein (2).

10. Dispositif de serrage selon au moins une quelconque des revendications précédentes, **caractérisé en ce que** plusieurs aires de roulement (16, 18) sérielles et plusieurs rouleaux (20) sériels sont disposés.

11. Dispositif de serrage selon au moins une quelconque des revendications précédentes, **caractérisé par** un arrangement desdites deux plaques (6, 8) en parallèle à un écart variable moyennant lesdits rouleaux (20).

12. Dispositif de serrage selon au moins une quelconque des revendications précédentes, **caractérisé en ce que** lesdits systèmes de commande (26, 59) sont accouplés l'un à l'autre.

13. Système de freinage d'un véhicule, en particulier d'un véhicule utilitaire, comprenant un frein à disque à un disque de frein (2) et un étrier de frein (4) et pourvu d'un dispositif de serrage (1) selon au moins une quelconque des revendications précédentes dans un espace (58) entre ledit disque de frein (2) et ledit étrier de frein (4).

14. Système de freinage selon la revendication 13, **caractérisé en ce qu'**une aire de clavette (52) dudit étrier de frein (4) est formée à un tel angle tranchant, relatif au plan dudit disque de frein (2), qu'à un disque de frein (2) tournant relativement audit étrier de frein (4) et à un dispositif de serrage (1) introduit dans ledit espace (58), en état avancé, ce dispositif de serrage se clavette de plus en plus jusqu'au point où apparaisse un blocage automatique.
